# EUROPÄISCHE PATENTSCHRIFT

(11) **EP 0 573 394 B1**
(45) Veröffentlichungstag und Bekanntmachung des Hinweises auf die Patenterteilung: **15.01.1997**
(21) Anmeldenummer: 93810386.8
(22) Anmeldetag: 27.05.1993
(51) Int. Cl.: C08L 27/06, C08K 5/00

(54) **Stabilisierte chlorhaltige Polymerzusammensetzungen**
Stabilized chlorinated polymer compositions
Compositions de polymères chlorées et stabilisées

(30) Priorität: 04.06.1992 CH 1806/92
(43) Veröffentlichungstag der Anmeldung: 08.12.1993
(73) Patentinhaber: Ciba SC Holding AG, 4057 Basel (CH)
(72) Erfinder: Kaufhold, Johannes, W-6145 Lindenfels (DE); Zinke, Horst, Dr., W-6101 Reichelsheim/Odw. (DE)

(56) Entgegenhaltungen:
- EP-A- 0 337 084

## Beschreibung

Die Erfindung betrifft neue chlorhaltige Polymerzusammensetzungen und die Verwendung der Polymerzusammensetzungen.

Aus US-A-3,919,165 ist eine Stabilisatormischung für halogenhaltige Polymere bekannt, welche eine organische Thiophosphorverbindung enthält. Weitere Thiophosphorverbindungen zur Stabilisierung von halogenhaltigen Polymeren sind auch aus DE-C-28 09 492 und EP-A-0 090 770 bekannt.

Die bekannten Stabilisatoren und Stabilisatorgemische können in den Polymeren nicht allen gestellten Anforderungen entsprechen.

Es wurde nun gefunden, dass die chlorhaltigen Polymerzusammensetzungen, stabilisiert nach vorliegender Erfindung, weiter verbesserte Eigenschaften bezüglich der Thermo- und Lichtstabilität aufweisen.

Erfindungsgemäss wird das mit einer Zusammensetzung mit oder ohne Weichmacher erreicht, enthaltend ein chlorhaltiges Polymer und ein Stabilisatorgemisch, enthaltend:
a) mindestens ein Zinnalkoholat oder Zinncarboxylat der Formel

   [(R₂)₂Sn(OR')]₂O (Ia);

   [(R₂)Sn(OR')₂]₂O (Ib);

   (R₂)Sn(OR')O (Ic);

   [-(R₂)Sn(OR')O-]ₘ (Id);

   [(R₁CO₂)Sn(R₂)₂]₂O (IIa);

   oder

   [-(R₂)₂Sn-O₂C-R₃-CO₂-{(R₂)₂SnO}ᵢ-]ₙ (IIb);

   wobei
   R' C₁-C₁₈-Alkyl, Phenyl, mit C₁-C₁₂-Alkyl substituiertes Phenyl oder Phenyl-C₁-C₁₂-alkyl;
   R₁ C₃-C₂₄-Alkyl, Phenyl, mit C₁-C₁₂-Alkyl substituiertes Phenyl, C₅-C₁₀-Cycloalkyl, Phenyl-C₁-C₁₂-alkyl oder R₄-O₂C-CH=CH-;
   R₂ C₁-C₂₄-Alkyl oder C₄-C₁₈-Alkanoyloxy-ethyl;
   R₃ Phenylen, mit C₁-C₁₂-Alkyl substituiertes Phenylen, C₁-C₁₈-Alkylen oder -CH=CH- R₄ C₁-C₂₄-Alkyl, C₅-C₁₀-Cycloalkyl, Phenyl oder mit C₁-C₁₂-Alkyl substituiertes Phenyl;
   i eine Zahl grösser gleich 0;
   m eine Zahl 2 oder 3 und
   n eine Zahl grösser gleich 1 bedeuten;
b) mindestens ein organisches Zinkcarboxylat, Zinkphenolat
   oder ein Zinnchlorid der Formel

   [(R₁CO₂)ₓ(R₂)_{y}Cl_{z}Sn]ₐOₐ₋₁ (III)

   wobei
   R₁ und R₂ die unter Formel (IIa) angegebenen Bedeutungen haben,
   x und y unabhängig voneinander eine Zahl 0, 1 oder 2;
   a eine Zahl 1 oder 2;
   z eine Zahl 1, 2, 3 oder 4 bedeuten,
   mit der Massgabe, dass x + y + z + a fünf ergibt;
   und
c) mindestens ein Thiophosphat oder -phosphit der Formel

   (R₆S)₃P=X_{b} (IV)

   wobei R₆ C₃-C₁₈-Alkyl, Phenyl, mit C₁-C₁₂-Alkyl oder -CO₂R₅ substituiertes Phenyl,
   C₄-C₂₁-Alkanoyloxyalkylen oder, gegebenenfalls mit Sauerstoff, Schwefel oder -NR₅- unterbrochenes, C₁-C₁₈-Alkyloxycarbonyl-C₁-C₁₂-alkylen,
   Phenyl-C₁-C₁₂-alkylenoxycarbonyl-C₁-C₁₂-alkylen, mit C₁-C₁₂-Alkyl substituiertes Phenyl-C₁-C₁₂-alkylenoxycarbonyl-C₁-C₁₂-alkylen oder C₅-C₁₅-Cycloalkyl-C₀-C₆-alkylenoxycarbonyl-C₁-C₁₂-alkylen;
   R₅ Wasserstoff oder C₁-C₆-Alkyl;
   X Sauerstoff oder Schwefel und
   b eine Zahl 0 oder 1 bedeuten.

Die genannten Bestandteile a), b) und c) können auch als Mischungen verschiedener Einzelverbindungen vorliegen. Unter a) sind auch die Komproportionierungsprodukte, die sich aus den möglichen Mischungen der Verbindungen (Ia), (Ib) und (Id) ergeben, zu verstehen.

Bedeutet einer der Reste R', R₁, R₂, R₄, R₅ oder R₆ beispielsweise eine Alkylgruppe mit bis zu 24 C-Atomen, so sind Beispiele dafür Methyl, Ethyl, Propyl, Isopropyl, n-Butyl, i-Butyl, tert.-Butyl, Pentyl, Hexyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1,1,3,3-Tetramethylhexyl, 1-Methylundecyl, 3,5,5-Trimethylhexyl, Eicosyl, Henicosyl und Docosyl.

Bedeutet R', R₁, R₄ oder R₆ mit C₁-C₁₂-Alkyl substituiertes Phenyl, so sind Beispiele dafür Methylphenyl, Ethylphenyl, Propylphenyl, n-Butylphenyl, tert.-Butylphenyl, Octylphenyl, Dimethylphenyl, Methyl-tert.-butylphenyl und Di-tert.-butylphenyl.

Die Bedeutung der Alkylengruppen und Phenylengruppen lässt sich von derjenigen der angeführten Alkyl- bzw. Phenylgruppen ableiten.

Bedeutet R₁ oder R₄ C₅-C₁₀-Cycloalkyl, so kann dies z.B. Cyclopentyl, Cyclohexyl, Cyclooctyl oder Cyclodecyl sein.

Bedeutet R' oder R₁ Phenyl-C₁-C₁₂-alkyl, so sind Beispiele dafür Benzyl oder Methylbenzyl.

R₂ und R₆ ist als C₄-C₈-Alkanoyloxy-ethyl bzw. C₄-C₂₁-Alkanoyloxyalkyl beispielsweise Acetoxyethyl, Propionyloxyethyl, Butyryloxyethyl, Octanoyloxyethyl, Acetoxypropyl, Propionyloxypropyl, Butyryloxypropyl und Octanoyloxypropyl.

Bedeutet R₆, gegebenenfalls mit Sauerstoff, Schwefel oder -NR₅- unterbrochenes, C₁-C₁₈-Alkyloxycarbonyl-C₁-C₁₂-alkylen, so sind Beispiele dafür C₄H₉OC(O)C₂H₄- und C₄H₉OC(O)C₄H₈-.

Bedeutet R₆, gegebenenfalls mit Sauerstoff, Schwefel oder -NR₅- unterbrochenes, Phenyl-C₁-C₁₂-alkylenoxycarbonyl-C₁-C₁₂-alkylen, so sind Beispiele dafür C₆H₅CH₂OC(O)C₂H₄- und C₆H₅CH₂OC(OC)C₄H₈-.

Bedeutet R₆, gegebenenfalls mit Sauerstoff, Schwefel oder -NR₅- unterbrochenes, mit C₁-C₁₂-Alkyl substituiertes Phenyl-C₁-C₁₂-akylenoxycarbonyl-C₁-C₁₂-alkylen, so sind Beispiele dafür C₆H₄(CH₃)CH₂OC(O)C₂H₄- und C₆H₄(CH₃)CH₂OC(O)C₄H₈-.

Bedeutet R₆, gegebenenfalls mit Sauerstoff, Schwefel oder -NR₅- unterbrochenes, C₅-C₁₅-Cycloalkyl-C₀-C₆-alkylen-oxycarbonyl-C₁-C₁₂-alkylen, so sind Beispiele dafür C₆H₁₁CH₂OC(O)C₂H₄- und C₆H₁₁CH₂OC(O)C₄H₈-.

Die erfindungsgemässen Polymerzusammensetzungen können weitere Komponenten enthalten. Es handelt sich beispielsweise um Antioxidantien, Lichtschutzmittel, UV-Absorber, Polyole, Epoxide, epoxidierte Öle und weitere Komplexbildner für Lewis-Säuren.

Zweckmässig sind Zusammensetzungen, wie oben beschrieben, enthaltend als a) eine Verbindung der Formel (IIa), worin R₁ C₆-C₁₈-Alkyl und R₂ C₄-C₈-Alkyl bedeuten, oder der Formel (IIb), worin R₃ Phenylen oder -CH=CH- bedeutet. Bei den Verbindungen der Formel (IIb) ist i vorzugsweise eine Zahl zwischen 0 und 2 und n eine Zahl zwischen 1 und 4.

Zweckmässig sind Polymerzusammensetzungen, wie oben beschrieben, enthaltend als b) mindestens eine organische Zinkverbindung aus der Reihe der aliphatischen gesättigten C₂-C₂₂-Carboxyxate, der aliphatischen olefinischen C₃-C₂₂-Carboxylate, der aliphatischen C₂-C₂₂-Carboxylate, die mit wenigstens einer OH-Gruppe substituiert sind, der cyclischen und bicyclischen Carboxylate mit 5-22 C-Atomen, der aromatischen C₇-C₂₂-Carboxylate, der mit wenigstens einer OH-Gruppe substituierten aromatischen C₇-C₂₂-Carboxylate, der C₁-C₁₆-alkylsubstituierten Phenylcarboxylate, der Phenyl-C₁-C₁₆-alkylcarboxylate oder der C₆-C₁₈-Phenolate.

Namentlich zu erwähnen sind, als Beispiele, die Zinksalze der monovalenten Carbonsäuren, wie Essigsäure, Propionsäure, Buttersäure, Valeriansäure, Hexansäure, Enanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, Cuminsäure, n-Propylbenzoesäure, Salicylsäure, p-tert-Octylsalicylsäure, und Sorbinsäure; Zinksalze der Monoester der divalenten Carbonsäuren, wie Oxalsäure, Malonsäure, Bernsteinsäure, Glutaminsäure, Adipinsäure, Pentan-1,5-dicarbonsäure, Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Mellophansäure, Pyromellithsäure.

Bevorzugt sind Zusammensetzungen, wie beschrieben, enthaltend als b) ein organisches Zinkcarboxylat einer Carbonsäure mit 7 bis 18 C-Atomen, wie beispielsweise Benzoate oder Alkanoate, bevorzugt Stearate, Oleate, Laurate, Palmitate, Hydroxystearate oder 2-Ethylhexanoate oder eine Verbindung der Formel (III), worin R₁ C₆-C₁₈-Alkyl, R₂ C₄-C₈-Alkyl und a die Zahl 1 bedeuten. Besonders bevorzugt sind Stearate, Oleate und p-tert-Butylbenzoate.

Zweckmässig sind Zusammensetzungen, wie oben beschrieben, enthaltend als c) mindestens eine Verbindung der Formel (IV), worin R₆ C₃-C₁₈-Alkyl, mit -CO₂R₅ substituiertes Phenyl, mit Sauerstoff unterbrochenes, C₁-C₁₈-Alkyloxycarbonyl-C₁-C₁₂-alkylen, Phenyl-C₁-C₁₂-alkylenoxycarbonyl-C₁-C₁₂-alkylen oder C₅-C₁₅-Cycloalkyl-C₀-C₆-alkylenoxycarbonyl-C₁-C₁₂-alkylen; und R₅ Wasserstoff oder C₁-C₆-Alkyl; und insbesondere R₆ C₆-C₁₂-Alkyl oder C₃-C₁₈-Alkyloxycarbonyl-C₁-C₅-alkylen bedeutet.

Beispiele für Verbindungen der Formel (IV) sind:

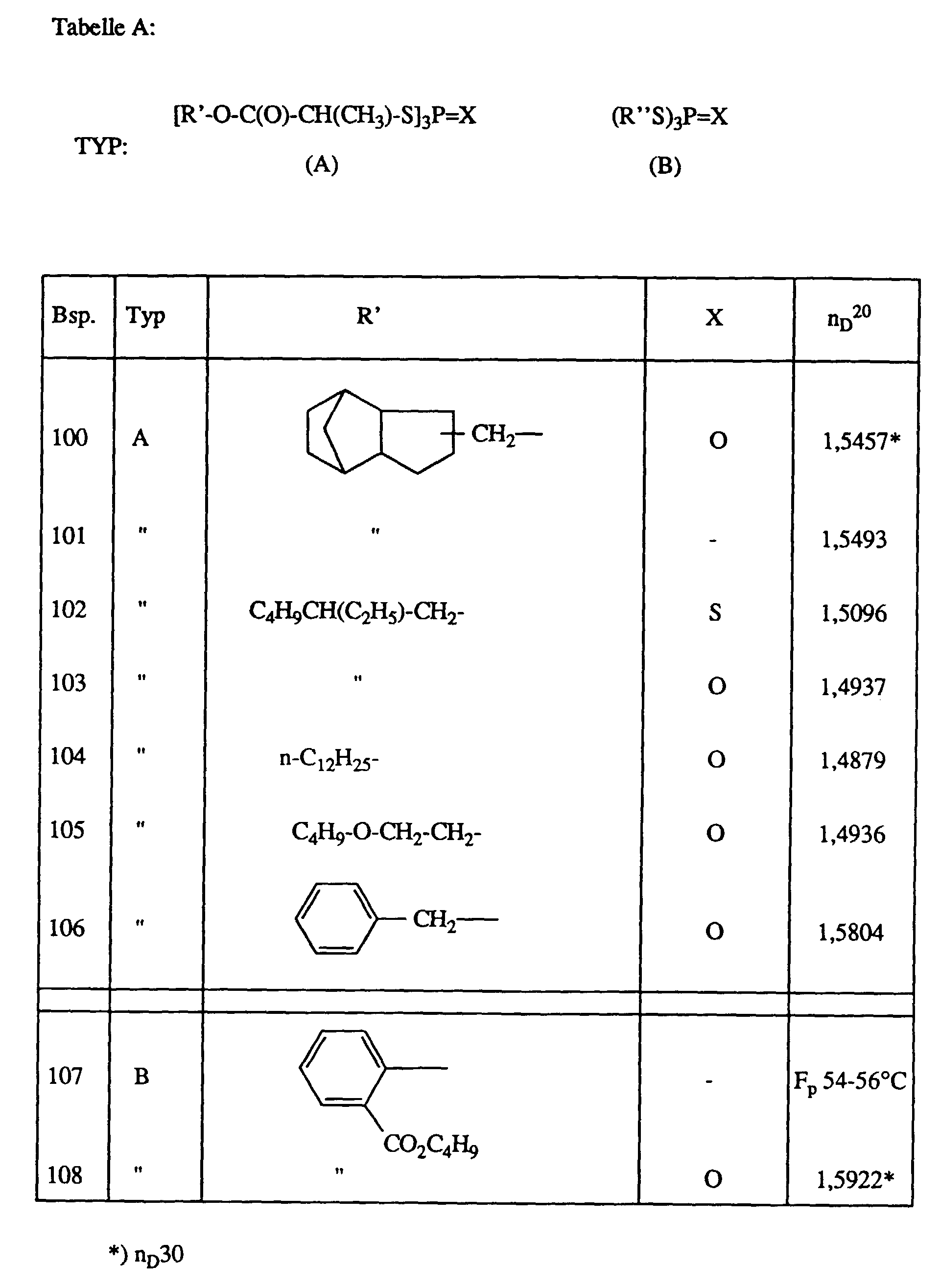

Bevorzugt sind Zusammensetzungen, wie oben beschrieben, enthaltend:

[C₄H₉CH(C₂H₅)CO₂-Sn-(C₄H₉)₂]₂O,

[C₇₋₉H₁₅₋₁₉CO₂]₂Zn

und

[C₄H₉CH(C₂H₅)CH₂OC(O)CH₂S]₃P=O.

Die Komponenten a), b) und c) der Zusammensetzung sind für sich allein bekannt und können nach bekannten Methoden hergestellt werden. So sind beispielsweise die Organozinnverbindungen in "Houben-Weyl, Methoden der Organischen Chemie, Georg Thieme Verlag, Stuttgart 1978, Bd. 13/6, S. 294ff.", "Sawyer, A.K., Organotin Compounds, Marcel Dekker Inc., New York 1971, Vol. I, Chap. II und III und Vol. II, S. 264" und in "Neumann, W.P., Die Organische Chemie des Zinns, Ferdinand Enke Verlag, Stuttgart 1967, S. 131" beschrieben. Eine nähere Beschreibung der Phosphorverbindungen findet sich beispielsweise in "Houben-Weyl, Methoden der Organischen Chemie, Georg Thieme Verlag, Stuttgart 1964, Bd. 12/2, S. 93ff und 742ff'' und in DE-PS 28 09 492.

Als chlorhaltige Polymere können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chorhaltiges Polymerisat ist Polyvinylchlorid besonders bevorzugt, insbesondere Suspensionspolymerisat und Massepolymerisat.

Zweckmässig sind Polymerzusammensetzungen, wie vorstehend beschrieben, enthaltend, bezogen auf 100 Gew.-Teile Zusammensetzung,
a) 0,1 bis 2,5 Gew.-Teile einer Verbindung der Formel (Ia), (Ib), (Ic), (Id), (IIa) oder (IIb),
b) 0,01 bis 2 Gew.-Teile eines Zinkcarboxylates, Zinkphenolates und/oder einer Verbindung der Formel (III) und
c) 0,1 bis 3 Gew.-Teile einer Verbindung der Formel (IV).

Bevorzugte Mengenbereiche für die Verbindungen der Formel (Ia), (Ib), (Ic), (Id), (IIa) oder (IIb), oder deren Mischungen, in der Polymerzusammensetzung sind 0,5 bis 1,5 Gew.-Teile, bezogen auf 100 Gew.-Teile Zusammensetzung. Besonders bevorzugt sind 0,6 bis 1,0 Gew.-Teile.

Bevorzugte Mengenbereiche für die Zinkcarboxylate, Zinkphenolate und/oder die Verbindungen der Formel (III) in der Zusammensetzung sind 0,05 bis 1 Gew.-Teile, bezogen auf 100 Gew.-Teile Zusammensetzung.

Bevorzugte Mengenbereiche für die Verbindungen der Formel (IV) in der Zusammensetzung sind 0,3 bis 2 Gew.-Teile, bezogen auf 100 Gew.-Teile Zusammensetzung. Besonders bevorzugt sind 0,4 bis 1 Gew.-Teil.

Das chlorhaltige Polymer kann einen Weichmacher enthalten, wobei chlorhaltige Polymere, die keinen Weichmacher enthalten, bevorzugt sind.

Als organische Weichmacher kommen beispielsweise solche aus den folgenden Gruppen in Betracht:

### A) Phthalate (Phthalsäureester)

Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexylphthalat (DOP).

### B) Ester aliphatischer Dicarbonsäuren , insbesondere Ester von Adipin-, Azelain- und Sebazinsäure

Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

### C) Trimellithsäureester,

beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.

### D) Polymerweichmacher

Eine Definition dieser Weichmacher und Beispiele für solche sind im "Plastics Additives Handbook", Herausgeber H. Gächter und H. Müller, Hanser Publishers, 1985, Seite 284, Kapitel 5.7.10 sowie in "PVC Technology", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und C₉-C₁₁-Alkanolgemische. Besonders vorteilhaft sind Polyesterweichmacher aus den genannten Dicarbonsäuren und monofunktionellen Alkoholen.

### E) Phosphorsäureester

Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt ist Tri-2-ethylhexyl-phosphat.

### F) Chlorierte Kohlenwasserstoffe (Paraffine)

### G) Kohlenwasserstoffe

### H) Monoester, z.B. Butyloleat, Phenoxyethyloleat, Tetrahydrofurfuryloleat und Alkylsulfonsäureester.

### I) Glycolester, z.B. Diglykolbenzoate.

Definitionen und Beispiele für Weichmacher der Gruppen F) bis I) sind den folgenden Handbüchern zu entnehmen:

"Plastics Additives Handbook", Herausgeber H. Gächter und H. Müller, Hanser Publishers, 1985, Seite 284, Kapitel 5.7.11 (Gruppe F)), und Kapitel 5.7.13 (Gruppe G)).

"PVC Technology", Herausgeber W.V. Titow, 4th. Ed., Elsevier Publishers, 1984, Seiten 171-173, Kapitel 6.10.2 (Gruppe F)), Seite 174, Kapitel 6.10.5 (Gruppe G)), Seite 173, Kapitel 6.10.3 (Gruppe H)) und Seiten 173-174, Kapitel 6.10.4 (Gruppe I)).

Besonders bevorzugt sind Weichmacher aus den Gruppen A) bis E), insbesondere A) bis C), vor allem die in diesen Gruppen als bevorzugt herausgestellten Weichmacher. Besonders günstig ist Di-2-ethylhexylphthalat (DOP).

Die Weichmacher können in einer Menge von beispielsweise 15 bis 70, zweckmässig 15 bis 60 und insbesondere 20 bis 50 Gew.-Teilen, bezogen auf 100 Gew.-Teile Polymerzusammensetzung, angewendet werden.

Die erfindungsgemässen Zusammensetzungen können auch weitere, für chlorhaltige Thermoplasten übliche Stabilisatoren enthalten. So enthalten sie beispielsweise 0-3 Teile, bezogen auf die Zusammensetzung, insbesondere 0-1,5, vor allem 0-1 Teile eines oder mehrerer Phosphite. Solche Phosphite können etwa in einer Menge von 0,01-3, insbesondere 0,01-1,5, z.B. 0,01-1, bevorzugt 0,1-0,6, z.B. 0,2-0,5 Teilen enthalten sein. Beispiele für derartige Phosphite sind etwa solche der Formeln 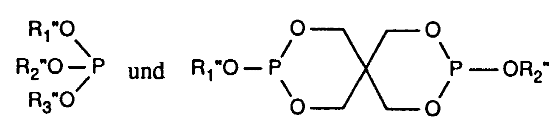 worin R¹", R²" und R³" gleich oder verschieden sind und C₆-C₁₈-Alkyl, C₆-C₁₈-Alkenyl, einen substituierten oder unsubstituierten Phenylrest oder C₅-C₇-Cycloalkyl bedeuten.

Bedeuten R¹", R²" und R³" C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R¹", R²" und R³" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-Octylphenyl, p-Nonylphenyl oder p-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, Decyldiphenyl-, (2,4-Di-tert.-butylphenyl)-di-dodecylphosphit, (2,6-Di-tert.-butylphenyl)-di-dodecylphosphit, die Bis-[2,4-di-tert.-butyl-6-methylphenyl]-alkylphosphite und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyl-didecyl-phosphit.

Ferner können in den erfindungsgemässen Zusammensetzungen weitere bekannte Costabilisatoren enthalten sein, beispielsweise 0-2, insbesondere 0-1,5 Teile, bezogen auf die Zusammensetzung. Sie sind dann vorzugsweise in einer Menge von 0,01-2, insbesondere 0,05-1,5, z.B. 0,1-1, vor allem 0,1-0,5 Teilen vorhanden. Als derartige Costabilisatoren seien Dehydracetsäure, 2,4-Dihydroxybenzophenon, 2,4-Dihydroxy-4'-tert.-butylbenzophenon Dihydropyridin-Derivate und Pyrrolderivate genannt.

Als Pyrrol-Costabilisatoren sind jene besonders zu erwähnen, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxycarbonyl-4-phenyl-1H-pyrrol genannt.

Ferner können die erfindungsgemässen Zusammensetzungen neben den vorstehend genannten fakultativen Costabilisatoren oder an deren Stelle noch weitere fakultative Bestandteile enthalten, z.B. organische Antimonverbindungen, wie Antimon-tris-[isooctyl-thioglykolat] (Isooctyl = 2-Ethylhexyl).

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Zusammensetzung, zweckmässig bis zu 2 Gew.-Teilen und vorzugsweise 0,01 bis 1 Gew.-Teil. Typische Beispiele von Polyolen sind Pentaerythrit, Dipentaerythrit, Trimethylolpropan, Ditrimethylolpropan, Tris-(2-hydroxyethyl)isocyanurat (THEIC), wobei letzteres bevorzugt ist, Sorbit, Mannit und Inosit.

Ferner können die erfindungsgemässen Zusammensetzungen übliche Antioxidantien, Lichtstabilisatoren und UV-Adsorber enthalten. Beispiele dafür sind:

### 1. Antioxidantien

1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.

1.4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.

1.5. Alkyliden-Bisphenole, z.B. 2,2'-Methylen-bis-(6-tert-butyl-4-methylphenol), 2;2-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2;2'-Ethyliden-bis-(4,6-di-ten-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmexaptobutan, 1,1,5,5-Tetra-(5-tert-butyl-4-hydroxy-2-methylphenyl)-pentan.

1.6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.

1.7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(33-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

1.8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

1.9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.12. Ester der β-(3,5-Di-tert-butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.13. Ester der β-(5-tert-Butyl-4-hydroxy-3-methylphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, l;2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der 3,5-Di-tert-butyl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

### 2. UV-Absorber und Lichtschutzmittel

2.1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol' 2-(3',5'-Di-tert-amyl-2'-hydroxyphenyl)-benztriazol, 2-(3'3'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)-phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; 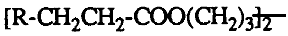 mit R = 3'-tert-Butyl-4'-hydroxy-5'-2H-benztriazol-2-yl-phenyl.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dirnethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-Bis-(2,2,6,6-tetramethyl-piperidyl)-succinat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperaainon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

2.7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Je nach Verwendungszweck können in die erfindungsgemässen Zusammensetzungen ausserdem noch weitere übliche Zusätze eingearbeitet werden, wie z.B.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Weitere Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-Bis-(2,4-di-tert-butyl-6-methylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-ten-butyl-6-methylphenyl)-ethylphosphit.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert-Butylbenzoesäure, Adipinsäure, Diphenylessigsäure.

9. Füllstoffe und Verstärkungsmittel, wie z.B. Calciumcarbonat, Silikate, Glasfasern, Talk, Kaolin, Glimmer, Bariumsulfat, Metalloxide und -hydroxide, Ruß, Graphit.

10. Sonstige Zusätze, wie z.B. Weichmacher, Gleitmittel, Emulgatoren, Pigmente, Optische Aufheller, Flammschutzmittel, Antistatika, Treibmittel.

11. Benzofuranone bzw. Indolinone, wie z.B. in US-A-4 325 863 oder US-A-4 338 244 beschrieben.

Neben den genannten Stabilisatoren und Costabilisatoren nach dieser Erfindung können auch Epoxyverbindungen, wie 1,2-Epoxide und Oxirane, in Mengen von beispielsweise bis zu 10 Gew.-Teilen, bezogen auf 100 Gew.-Teile Zusammensetzung, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojablumenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Xenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.

Die erfindungsgemässen Zusammensetzungen können auf an sich bekannte Weise hergestellt werden. In der Regel wird das Stabilisatorsystem in das Polymer eingearbeitet, wozu sich an sich bekannte Vorrichtungen, wie Kalander, Mischer, Kneter und dergleichen, anbieten.

Die nach vorliegender Erfindung stabilisierten Zusammensetzungen können auf bekannte Weisen in die gewünschte Form gebracht werden. Solche Verfahren sind beispielsweise Mahlen, Kalandrieren, Extrudieren, Spritzgiessen, Sintern oder Spinnen, ferner Extrusions-Blasen oder eine Verarbeitung nach dem Plastisol-Verfahren. Die Zusammensetzungen können auch zu Schaumstoffen verarbeitet werden.

Bevorzugte stabilisierte chlorhaltige Polymerzusammensetzungen sind nicht weichgemachte, resp. weichmacherfreie oder im wesentlichen weichmacherfreie Zusammensetzungen.

Die erfindungsgemässen Zusammensetzungen eignen sich insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Bürofolien, Folien für Traglufthallen und Folien für Kraftfahrzeuginnenräume geeignet.

Beispiele für die Anwendung der erfindungsgemässen Zusammensetzungen als Plastisole sind Kunstleder, Fussboden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Bevorzugt wird die Verwendung der oben beschriebenen Polymerzusammensetzungen zur Herstellung von Hartprofilen für Aussenanwendungen und von Hartfolien.

Das nachfolgende Beispiel erläutert die Erfindung näher. Alle Angaben in Teilen und Prozenten beziehen sich auf das Gewicht, sofern nicht anders angegeben.

### Beispiel 1: Eine PVC-Zusammensetzung wird durch Vermischen der einzelnen Komponenten gemäss nachfolgender Tabelle hergestellt (Mengenangaben in Gew.-Teilen).

**Tabelle 1:**

| |
|---|
| 100 Teile S-PVC, K-Wert 60 |
| 0,2 Teile Montansäureester |
| 1 Teil Glycerinmonooleat |
| 1,1 Teile Bis-(dibutyl-i-heptylcarboxy-zinn)-oxid |
| 0,2 Teile Zink-2-ethylhexoat |
| 0,5 Teile Tris-(2-ethylhexyloxy-carbonyl-methylthio)-phosphat |

Es handelt sich um eine Rezeptur für Hart-PVC-Profile für Aussenanwendungen. Die Zusammensetzung wird einem Dauerwalztest ausgesetzt, um die Stabilisatorwirkung im PVC zu prüfen.

Der Dauerwalztest wird derart ausgeführt, dass die PVC-Zusammensetzung bei 190°C auf einem Mischwalzwerk während 5 Minuten plastifiziert wird und anschliessend in Zeitabständen von 5 Minuten Proben aus der Mitte der Folie (0,3 mm Dicke) geschnitten werden. Danach wird der Yellowness-Index (YI), siehe Tabelle 2, nach ASTM D 1925-70 bestimmt (hohe YI-Werte bedeuten starke Verfärbung und damit geringe Stabilität).

**Tabelle 2:**

| | | | | | | | | |
|---|---|---|---|---|---|---|---|---|
| Versuchsdauer | 5 | 10 | 15 | 20 | 25 | 30 | 35 | 40 Minuten |
| YI | 1,6 | 4,4 | 6,1 | 12,6 | 20,5 | 33,1 | 43,2 | 63,1 |

### Beispiele 2-14:

Eine PVC-Zusammensetzung wird durch Vermischen der einzelnen Komponenten gemäss nachfolgender Tabelle hergestellt (Mengenangaben in Gew.-Teilen).

**Tabelle 3**

| |
|---|
| 100 Teile S-PVC, K-Wert 60 |
| 0,2 Teile Montansäureester |
| 1 Teil Glycerinmonooleat |

sowie die Stabilisatoren A-1 bis A-7, B-1 bis B-3 und C-1 bis C-5, wie sie in der Tabelle 4 angegeben sind.

Die Zusammensetzungen werden einem Dauerwalztest und einem statischen Hitzetest ausgesetzt, um die Stabilisatorwirkung im PVC zu prüfen.

Der Dauerwalztest (DWT) wird derart ausgeführt, dass die PVC-Zusammensetzung bei 190°C auf einem Mischwalzwerk während 5 Minuten plastifiziert wird und anschliessend nach 20 Minuten Proben aus der Mitte der Folie (0,3 mm Dicke) geschnitten werden. Danach wird der Yellowness-Index (YI), siehe Tabelle 4, nach ASTM D 1925-70 bestimmt (hohe YI-Werte bedeuten starke Verfärbung und damit geringe Stabilität).

Der statische Hitzetest (stat. H.) wird in einem Umluftofen bei 190°C durchgeführt, wobei die Bestimmung des Yellowness-Index ebenfalls nach 20 Minuten erfolgt; siehe Tabelle 4.

**Tabelle 4:**

| Bsp. Nr. | Stabilisatoren | | | DWT | stat. H. |
|---|---|---|---|---|---|
| 2 | 1,1 A-1; | 0,2 B-1; | 0,5 C-1; | 17,0 | |
| 3 | 1,1 A-1; | 0,2 B-2; | 0,5 C-1; | 18,9 | |
| 4 | 1,1 A-1; | 0,2 B-3; | 0,5 C-1; | 22,7 | |
| 5 | 1,2 A-1; | 0,2 B-1; | 0,5 C-2; | 13,3 | |
| 6 | 1,2 A-1; | 0,2 B-1; | 0,5 C-3; | 19,3 | |
| 7 | 1,2 A-1; | 0,2 B-1; | 0,5 C-4; | 21,8 | |
| 8 | 1,2 A-1; | 0,2 B-1; | 0,5 C-5; | 19,4 | |
| 9 | 1,2 A-2; | 0,1 B-1; | 0,5 C-1; | 12,7 | |
| 10 | 1,2 A-3; | 0,1 B-1; | 0,5 C-1; | 16,3 | |
| 11 | 0,9 A-4; | 0,1 B-1; | 0,8 C-1; | | 26,4 |
| 12 | 0,9 A-5; | 0,1 B-1; | 0,8 C-1; | | 28,3 |
| 13 | 0,8 A-6; | 0,1 B-1; | 1,0 C-1; | | 8,9 |
| 14 | 0,8 A-4; | 0,1 B-1; | 1,0 C-1; | | 14,6 |

Die verwendeten Stabilisatoren sind:
- A-1:: [(C₄H₉)₂SnO₂C-n-C₇H₁₅]₂O
- A-2:: (C₈H₁₇)₂Sn(O₂CCH)₂ (Maleat)
- A-3:: (C₄H₉)₂SnO₂CC₆H₄CO₂ (Phthalat)
- A-4:: [(C₄H₉)₂SnOC₁₃H₂₇]₂O
- A-5:: [(C₄H₉)₂SnOC₆H₄C₉H₁₇]₂O
- A-6:: Mischung aus (C₄H₉)Sn(O)OC₁₃H₂₇ (62,5%) und [(C₄H₉)SnOC₁₃H₂₇]₂O (37,5%)
- A-7:: Mischung aus (C₄H₉)Sn(O)OC₆H₄C₉H₁₇ (62,5%) und [(C₄H₉)SnOC₆H₄C₉H₁₇]₂O (37,5%)
- B-1:: Zn(O₂CCH(C₂H₅)C₄H₉)₂
- B-2:: Zn(O₂CC₁₁H₂₃)₂
- B-3:: Zn(O₂CC₆H₅)₂
- C-1:: (C₄H₉CH(C₂H₅)CH₂OOCCH₂S)₃P=O
- C-2:: (C₄H₉-O-C₂H₄OOCCH₂S)₃P
- C-3:: (C₄H₉-O-C₂H₄OOCCH₂S)₃P=O
- C-4:: (C₄H₉(C₂H₅)CHOOCCH₂S)₃P=S
- C-5:: (C₄H₉(C₂H₅)CHOOCCH₂S)₃P

## Patentansprüche

1. Zusammensetzung, enthaltend ein chlorhaltiges Polymer und ein Stabilisatorgemisch, enthaltend:
a) mindestens ein Zinnalkoholat oder Zinncarboxylat der Formel
[(R₂)₂Sn(OR')]₂O (Ia);
[(R₂)Sn(OR')₂]₂O (Ib);
(R₂)Sn(OR')O (Ic);
[-(R₂)Sn(OR')O-]ₘ (Id);
[(R₁CO₂)Sn(R₂)₂]₂O (IIa);
oder
[-(R₂)₂Sn-O₂C-R₃-CO₂-{(R₂)₂SnO}ᵢ-]ₙ (IIb);
wobei
R' C₁-C₁₈-Alkyl, Phenyl, mit C₁-C₁₂-Alkyl substituiertes Phenyl oder Phenyl-C₁-C₁₂-alkyl;
R₁ C₃-C₂₄-Alkyl, Phenyl, mit C₁-C₁₂-Alkyl substituiertes Phenyl, C₅-C₁₀-Cycloalkyl, Phenyl-C₁-C₁₂-alkyl oder R₄-O₂C-CH=CH-;
R₂ C₁-C₂₄-Alkyl oder C₄-C₁₈-Alkanoyloxy-ethyl;
R₃ Phenylen, mit C₁-C₁₂-Alkyl substituiertes Phenylen, C₁-C₁₈-Alkylen oder -CH=CH-R₄ C₁-C₂₄-Alkyl, C₅-C₁₀-Cycoalkyl, Phenyl oder mit C₁-C₁₂-Alkyl substituiertes Phenyl;
i eine Zahl grösser gleich 0;
m eine Zahl 2 oder 3 und
n eine Zahl grösser gleich 1 bedeuten;
b) mindestens ein organisches Zinkcarboxylat, Zinkphenolat
oder ein Zinnchlorid der Formel
[(R₁CO₂)ₓ(R₂)_{y}Cl_{z}Sn]ₐOₐ₋₁ (III)
wobei
R₁ und R₂ die unter Formel (IIa) angegebenen Bedeutungen haben,
x und y unabhängig voneinander eine Zahl 0, 1 oder 2;
a eine Zahl 1 oder 2;
z eine Zahl 1, 2, 3 oder 4 bedeuten,
mit der Massgabe, dass x + y + z + a fünf ergibt;
und
c) mindestens ein Thiophosphat oder -phosphit der Formel
(R₆S)₃P=X_{b} (IV)
wobei
R₆ C₃-C₁₈-Alkyl, Phenyl, mit C₁-C₁₂-Alkyl oder -CO₂R₅ substituiertes Phenyl,
C₄-C₂₁-Alkanoyloxyalkylen oder, gegebenenfalls mit Sauerstoff, Schwefel oder -NR₅-unterbrochenes, C₁-C₁₈-Alkyloxycarbonyl-C₁-C₁₂-alkylen,
Phenyl-C₁-C₁₂-alkylenoxycarbonyl-C₁-C₁₂-alkylen, mit C₁-C₁₂-Alkyl substituiertes Phenyl-C₁-C₁₂-alkylenoxycarbonyl-C₁-C₁₂-alkylen oder
C₅-C₁₅-Cycloalkyl-C₀-C₆-alkylenoxycarbonyl-C₁-C₁₂-alkylen;
R₅ Wasserstoff oder C₁-C₆-Alkyl;
X Sauerstoff oder Schwefel und
b eine Zahl 0 oder 1 bedeuten.

2. Zusammensetzung gemäss Anspruch 1, enthaltend als Komponente a) eine Verbindung der Formel (IIa), worin R₁ C₆-C₁₈-Alkyl und R₂ C₄-C₈-Alkyl bedeuten, oder der Formel (IIb), worin R₃ Phenylen oder -CH=CH- bedeutet.

3. Zusammensetzung gemäss einem der Ansprüche 1 oder 2, enthaltend als Komponente b) ein organisches Zinkcarboxylat einer Carbonsäure mit 7 bis 18 C-Atomen oder eine Verbindung der Formel (III), worin R₁ C₆-C₁₈-Alkyl, R₂ C₄-C₈-Alkyl und a die Zahl 1 bedeuten.

4. Zusammensetzung gemäss einem der Ansprüche 1 bis 3, enthaltend als Komponente c) eine Verbindung der Formel (IV), worin R₆ C₃-C₁₈-Alkyl, mit -CO₂R₅ substituiertes Phenyl, mit Sauerstoff unterbrochenes, C₁-C₁₈-Alkyloxycarbonyl-C₁-C₁₂-alkylen, Phenyl-C₁-C₁₂-alkylenoxycarbonyl-C₁-C₁₂-alkylen oder C₅-C₁₅-Cycloalkyl-C₀-C₆-alkylenoxycarbonyl-C₁-C₁₂-alkylen; und R₅ Wasserstoff oder C₁-C₆-Alkyl bedeutet.

5. Zusammensetzung gemäss Anspruch 1, enthaltend
[C₄H₉CH(C₂H₅)CO₂-Sn-(C₄H₉)₂]₂O,
[C₇₋₉H₁₅₋₁₉CO₂]₂Zn
und
[C₄H₉CH(C₂H₅)CH₂OC(O)CH₂S]₃P=O.

6. Zusammensetzung nach Anspruch 1 enthaltend, bezogen auf 100 Gew.-Teile Zusammensetzung,
a) 0,1 bis 2,5 Gew.-Teile einer Verbindung der Formel (Ia), (Ib), (Ic), (Id), (IIa) oder (IIb),
b) 0,01 bis 2 Gew.-Teile eines Zinkcarboxylates, Zinkphenolates oder einer Verbindung der Formel (III) und
c) 0,1 bis 3 Gew.-Teile einer Verbindung der Formel (IV).

7. Zusammensetzung nach Anspruch 6 enthaltend, bezogen auf 100 Gew.-Teile Zusammensetzung,
a) 0,5 bis 1,5 Gew.-Teile einer Verbindung der Formel (Ia), (Ib), (Ic), (Id), (IIa) oder (IIb),
b) 0,05 bis 1 Gew.-Teile eines Zinkcarboxylates, Zinkphenolates oder einer Verbindung der Formel (III) und
c) 0,3 bis 2 Gew.-Teile einer Verbindung der Formel (IV).

8. Zusammensetzung nach Anspruch 1, worin das Polymer Polyvinylchlorid ist oder dieses enthält.

9. Verwendung von Zusammensetzungen nach Anspruch 1 zur Herstellung von Hartprofilen für Aussenanwendung oder von Hartfolien.

## Claims

1. A composition comprising a chlorine-containing polymer and a stabiliser mixture comprising:
a) at least one tin alkoxide or tin carboxylate of the formula
[(R₂)₂Sn(OR')]₂O (Ia);
[(R₂)Sn(OR')₂]₂O (Ib);
(R₂)Sn(OR')O (Ic);
[-(R₂)Sn(OR')O-]ₘ (Id);
[(R₁CO₂)Sn(R₂)₂]₂O (IIa);
or
[-(R₂)₂Sn-O₂C-R₃-CO₂-{(R₂)₂SnO}ᵢ-]ₙ (IIb);
where
R' is C₁-C₁₈alkyl, phenyl, C₁-C₁₂alkyl-substituted phenyl or phenyl-C₁-C₁₂alkyl;
R₁ is C₃-C₂₄alkyl, phenyl, C₁-C₁₂alkyl-substituted phenyl, C₅-C₁₀cycloalkyl, phenyl-C₁-C₁₂alkyl or R₄-O₂C-CH=CH-;
R₂ is C₁-C₂₄alkyl or C₄-C₁₈alkanoyloxyethyl;
R₃ is phenylene, C₁-C₁₂alkyl-substituted phenylene, C₁-C₁₈alkylene or -CH=CH-R₄ is C₁-C₂₄alkyl, C₅-C₁₀cycloalkyl, phenyl or C₁-C₁₂alkyl-substituted phenyl;
i is a number greater than or equal to zero;
m is the number 2 or 3 and
n is a number greater than or equal to one;
b) at least one organic tin carboxylate, zinc phenoxide
or a tin chloride of the formula
[(R₁CO₂)ₓ(R₂)_{y}Cl_{z}Sn]ₐOₐ₋₁ (III)
where
R₁ and R₂ are as defined under formula (IIa);
x and y, independently of one another, are 0, 1 or 2;
a is the number 1 or 2;
z is the number 1, 2, 3 or 4,
with the proviso that x+y+x+a is five;
and
c) at least one thiophosphate or thiophosphite of the formula
(R₆S)₃P=X_{b} (IV)
where
R₆ is C₃-C₁₈alkyl, phenyl, C₁-C₁₂alkyl- or R₅CO₂-substituted phenyl,
C₄-C₂₁alkanoyloxyalkylene, C₁-C₁₈alkoxycarbonyl-C₁-C₁₂alkylene, which may be interrupted by oxygen, sulfur or -NR₅-,
phenyl-C₁-C₁₂alkylenoxycarbonyl-C₁-C₁₂alkylene, C₁-C₁₂alkyl-substituted phenyl-C₁-C₁₂alkylenoxycarbonyl-C₁-C₁₂alkylene or C₅-C₁₅cycloalkyl-C₀-C₆alkyleneoxycarbonyl-C₁-C₁₂alkylene;
R₅ is hydrogen or C₁-C₆alkyl;
X is oxygen or sulfur, and
b is the number zero or 1.

2. A composition according to claim 1, in which component a) is a compound of the formula (IIa) in which R₁ is C₆-C₁₈alkyl and R₂ is C₄-C₈alkyl, or of the formula (IIb) in which R₃ is phenylene or -CH=CH-.

3. A composition according to either claim 1 or claim 2, in which component (b) is an organic tin carboxylate of a carboxylic acid having 7 to 18 carbon atoms or a compound of the formula (III) in which R₁ is C₆-C₁₈alkyl, R₂ is C₄-C₈alkyl and a is the number 1.

4. A composition according to any one of claims 1 to 3, in which component c) is a compound of the formula (IV) in which R₆ is C₃-C₁₈alkyl, R₅CO₂-substituted phenyl, oxygen-interrupted C₁-C₁₈alkyloxycarbonyl-C₁-C₁₂alkylene, phenyl-C₁-C₁₂alkyleneoxycarbonyl-C₁-C₁₂alkylene or C₅-C₁₅cycloalkyl-C₀-C₆alkyleneoxycarbonyl-C₁-C₁₂alkylene; and R₅ is hydrogen or C₁-C₆alkyl.

5. A composition according to claim 1, comprising
[C₄H₉CH(C₂H₅)CO₂-Sn-(C₄H₉)₂]₂O,
[C₇₋₉H₁₅₋₁₉CO₂]₂Zn
and
[C₄H₉CH(C₂H₅)CH₂OC(O)CH₂S]₃P=O.

6. A composition according to claim 1, comprising, based on 100 parts by weight of composition,
a) from 0.1 to 2.5 parts by weight of a compound of the formula (Ia), (Ib), (Ic), (Id), (IIa) or (IIb),
b) from 0.01 to 2 parts by weight of a zinc carboxylate, zinc phenoxide or a compound of the formula (III) and
c) from 0.1 to 3 parts by weight of a compound of the formula (IV).

7. A composition according to claim 6, comprising, based on 100 parts by weight of composition,
a) from 0.5 to 1.5 parts by weight of a compound of the formula (Ia), (Ib), (Ic), (Id), (IIa) or (IIb),
b) from 0.05 to 1 part by weight of a zinc carboxylate, zinc phenoxide or a compound of the formula (III) and
c) from 0.3 to 2 parts by weight of a compound of the formula (IV).

8. A composition according to claim 1, in which the polymer is or contains polyvinyl chloride.

9. The use of a composition according to claim 1 for the production of rigid profiles for external application or of rigid sheeting.

## Revendications

1. Composition contenant un polymère chloré et un mélange de stabilisants, contenant :
a) au moins un alcoolate d'étain ou un carboxylate d'étain de formule
[(R₂)₂Sn(OR')]₂O (Ia);
[(R₂)Sn(OR')₂]₂ (Ib);
(R₂)Sn(OR')O (Ic);
[-(R₂)Sn(OR')O-]ₘ (Id);
[(R₁CO₂)Sn(R₂)₂]₂ (IIa);
ou
[-(R₂)₂Sn-O₂C-R₃-CO₂-{(R₂)₂SnO}ᵢ-]ₙ (IIb);
où
R' est un groupe alkyle en C₁-C₁₈, phényle, phényle substitué par des substituants alkyle en C₁-C₁₂, ou phényle-(alkyle en C₁-C₁₂) ;
R₁ est un groupe alkyle en C₃-C₂₄, phényle, phényle substitué par des substituants alkyle en C₁-C₁₂, cycloalkyle en C₅-C₁₀, phényle-(alkyle en C₁-C₁₂) ou R₄-O₂C-CH=CH ;
R₂ est un groupe alkyle en C₁-C₂₄ ou (alcanoyloxy en C₄-C₁₈)-éthyle ;
R₃ est un groupe phénylène, phénylène substitué par des substituants alkyle en C₁-C₁₂, alkylène en C₁-C₁₈ ou -CH=CH- ;
R₄ est un groupe alkyle en C₁-C₂₄, cycloalkyle en C₅-C₁₀, phényle, ou phényle substitué par des substituants alkyle en C₁-C₁₂ ;
i est un nombre supérieur ou égal à 0 ;
m est un nombre valant 2 ou 3, et
n est un nombre supérieur ou égal à 1 ;
b) au moins un carboxylate de zinc organique, un phénolate de zinc ou un chlorure d'étain de formule
[(R₁CO₂)ₓ(R₂)_{y}Cl_{z}Sn]ₐOₐ₋₁ (III)
dans laquelle
R₁ et R₂ ont les significations données pour la formule (IIa),
x et y, indépendamment l'un de l'autre, sont chacun un nombre valant 0, 1 ou 2 ;
a est le nombre 1 ou 2 ;
z est le nombre 1, 2, 3 ou 4,
du moment que x + y + z + a = 5 ;
et
c) au moins un thiophosphate ou thiophosphite de formule
(R₆S)₃P=X_{b} (IV)
dans laquelle
R₆ est un groupe alkyle en C₃-C₁₈, phényle, phényle substitué par des substituants alkyle en C₁-C₁₂ ou -CO₂R₅, alcanoyloxyalkylène en C₄-C₂₁ ou encore (alkyloxy en C₁-C₁₈)carbonyl(alkylène en C₁-C₁₂) éventuellement interrompu par l'oxygène, le soufre ou -NR₅, phényl-(alkylénoxy en C₁-C₁₂)carbonyl-(alkylène en C₁-C₁₂), phényl-(alkylénoxy en C₁-C₁₂)-carbonyl(alkylène en C₁-C₁₂) substitué par des substituants alkyle en C₁-C₁₂, ou encore (cycloalkyle en C₅-C₁₅)-(alkylénoxy en C₀-C₆)carbonyl(alkylène en C₁-C₁₂) ;
R₅ est un hydrogène ou un groupe alkyle en C₁-C₆ ;
X est un oxygène ou un soufre, et
b est le nombre 0 ou 1.

2. Composition selon la revendication 1, contenant comme constituant a) un composé de formule (IIa), dans laquelle R₁ est un groupe alkyle en C₆-C₁₈ et R₂ est un groupe alkyle en C₄-C₈, ou de formule (IIb), dans laquelle R₃ est le groupe phénylène ou -CH=CH.

3. Composition selon l'une des revendications 1 ou 2, contenant comme constituant b) un carboxylate organique de zinc d'un acide carboxylique ayant de 7 à 18 atomes de carbone ou un composé de formule (III) dans laquelle R₁ est un groupe alkyle en C₆-C₁₈, R₂ est un groupe alkyle en C₄-C₈ et a vaut 1.

4. Composition selon l'une des revendications 1 à 3, contenant comme constituant c) un composé de formule (IV) dans laquelle R₆ est un groupe alkyle en C₃-C₁₈, phényle substitué par -CO₂R₅, (alkyloxy en C₁-C₁₈)-carbonyl(alkylène en C₁-C₁₂) interrompu par l'oxygène, phényle (alkylénoxy en C₁-C₁₂)carbonyl(alkylène en C₁-C₁₂) ou (cycloalkyle en C₅-C₁₅)-(alkylénoxy en C₀-C₆)-carbonyl(alkylène en C₁-C₁₂) ; et R₅ est un hydrogène ou un groupe alkyle en C₁-C₆.

5. Composition selon la revendication 1, contenant :
[C₄H₉CH(C₂H₅)CO₂-Sn-(C₄H₉)₂]₂O,
[C₇₋₉H₁₅₋₁₉CO₂]₂Zn
et
[C₄H₉CH(C₂H₅)CH₂OC(O)CH₂S]₃P=O

6. Composition selon la revendication 1, contenant, pour 100 parties en poids de la composition,
a) de 0,1 à 2,5 parties en poids d'un composé de formule (Ia), (Ib), (Ic), (Id), (IIa) ou (IIb),
b) de 0,01 à 2 parties en poids d'un carboxylate de zinc, d'un phénolate de zinc ou d'un composé de formule (III), et
c) de 0,1 à 3 parties en poids d'un composé de formule (IV).

7. Composition selon la revendication 6, contenant, pour 100 parties en poids de la composition,
a) de 0,5 à 1,5 parties en poids d'un composé de formule (Ia), (Ib), (Ic), (Id), (IIa) ou (IIb),
b) de 0,05 à 1 partie en poids d'un carboxylate de zinc, d'un phénolate de zinc ou d'un composé de formule (III), et
c) de 0,3 à 2 parties en poids d'un composé de formule (IV).

8. Composition selon la revendication 1, dans laquelle le polymère est le poly(chlorure de vinyle) ou contient ce dernier.

9. Utilisation de compositions selon la revendication 1 pour fabriquer des profilés rigides pour applications extérieures, ou encore des feuilles rigides.
